# EUROPEAN PATENT APPLICATION

(11) **EP 4 729 165 A1**
(43) Date of publication of application: **22.04.2026**
(21) Application number: 25207757.3
(22) Date of filing: 09.10.2025
(51) Int. Cl.: B01J 15/00, B01J 19/00, B01J 19/24, H01M 8/10

(54) **REACTOR SYSTEM AND METHOD OF OPERATING**

(30) Priority: 15.10.2024 US 202418916536
(71) Applicant: Aerospace Carbon Solutions LLC, Evendale, OH 45215 (US)
(72) Inventor: LIU, Mingfei, Niskayuna, 12309-1027 (US); SUN, Changjie, Niskayuna, 12309-1027 (US)
(74) Representative: Openshaw & Co.

(57) **Abstract**

A reactor (100) system and methods of operating are described herein. In some approaches, the system comprises a reactor body (120) defining an internal cavity and a three-dimensional structure (112) disposed in the internal cavity. The three-dimensional structure (112) comprises an ionic conductor. A power supply (124) is coupled to the three-dimensional structure (112) generate an ionic current in the three-dimensional structure (112) to control a temperature of the reactor (100). In some embodiments, the three-dimensional structure (112) comprises multi-layer structure with alternating layers of the ionic conductor and the electronic conductor. In some embodiments, the system comprises a controller in operative communication with the power supply (124). The controller may control the amount of heat energy input to the reactor (100) by adjusting the parameters of the power supply (124). In some embodiments, a catalyst is disposed in the three-dimensional structure (112).

## Description

### TECHNICAL FIELD

These teachings relate generally to reactor systems and more particularly to a system and method for operating reactor systems.

### BACKGROUND

Chemical manufacturing in the process industry commonly involves reactions that are temperature dependent, and the reactor must be heated or cooled for a reaction to commence. Such approaches, however, involve energy-intensive and/or resource-intensive processes. In such traditional approaches, a heat exchanger may be included as a part of the reactor design which requires expensive upstream buffer capabilities, high capital expenditures and requires long response times from the heat source to the reactor. Accordingly, approaches for energy efficient, dynamically controlled reactors and methods of operating may be desirable.

### BRIEF DESCRIPTION OF DRAWINGS

Various needs are at least partially met through provision of the reactor system and method of operating described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 is a schematic view of a reactor, in accordance with various embodiments;
FIG. 2 is a perspective view of the three-dimensional structure of the reactor of FIG. 1, in accordance with various embodiments;
FIG. 3 is a schematic cross-sectional view of the three-dimensional structure in accordance with various embodiments;
FIG. 4 is a schematic cross-sectional view of the three-dimensional structure in accordance with various embodiments.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The reactor system and method of operating described herein provide for dynamic control over the internal temperature of a reactor. The various aspects of the present disclosure include a reactor with a three-dimensional structure disposed therein. The three-dimensional structure may be composed of an ionic conductor. A power supply is electrically connected across the three-dimensional structure for uniform heat dissipation and dynamic control to be utilized for various chemical processes and synthesis. The approaches for chemical reactions and heating fluid streams described herein may achieve a high energy efficiency, resulting in reduction of energy consumption by the system, while simultaneously achieving a high production rate and efficiency through the incorporation of an ionic conducting material.

Traditional approaches involve utilizing external heat transfer devices, such as a heat exchanger to add heat to a reactor. In using such traditional designs, there may be a significant distance between the heat transfer site and the site of the chemical reaction. The traditional design not only requires a long response time from the heat source to the reaction site but complicated process control for any dynamic operation and utilization of intermittent energy source.

Advantageously, the systems and methods described herein involve the integration of the chemical reaction and the heat transfer into a single piece of equipment. For example, the systems and methods described herein use an ionic conducting support to improve the response time from the heat source to the reaction site, and also to participate in the reaction. The heat is applied directly to the reaction site, and as a result, the systems and methods described herein may operate dynamically or use intermittent energy sources. Transferring heat this way can provide better thermal control of the reactor, improved selectivity through isothermal operation and a reduction of unwanted by-products.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

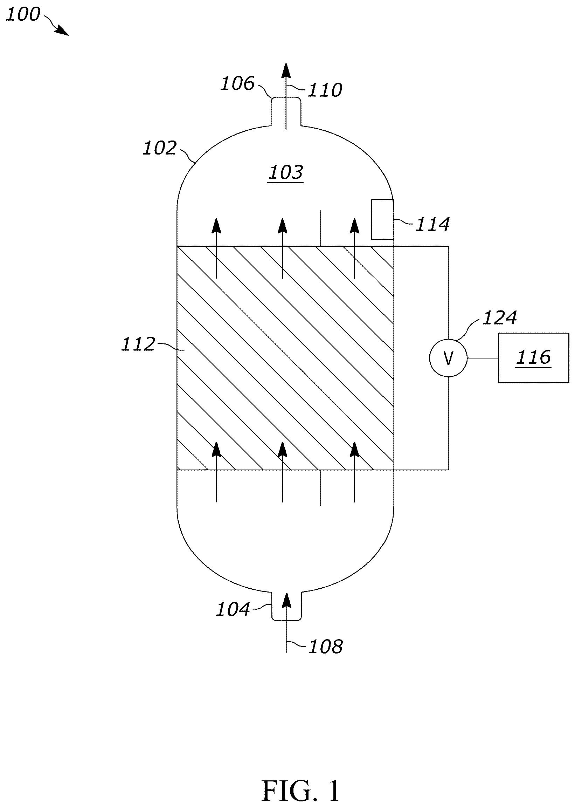

Referring now to FIG. 1, a schematic view of a reactor 100 is provided according to an exemplary embodiment of the present disclosure. It is contemplated that the reactor 100 described herein can be used in numerous applications for chemical reactors and heating fluid streams. One exemplary application is in the conversion of natural gas or hydrocarbon feedstock to syngas. In other exemplary applications, the reactor 100 may be used to convert captured CO₂ to CO through reversed water gas shift reaction for a downstream Fischer-Tropsch process. In yet another exemplary application, reactor 100 may be used to heat a water stream and/or CO₂ to a supercritical fluid for high temperature electrolysis or chemical process, or to decompose NH₃ for fuel cell operation or direct air capture regeneration.

As shown in FIGS. 1, the reactor 100 includes a reactor vessel 102 defining an internal cavity 103, a three-dimensional structure 112 enclosed within the internal cavity 103 of reactor vessel 102 and a power supply 124 electrically connected to the three-dimensional structure 112. The power supply 124 may transfer electrical energy to the three-dimensional structure 112, which may then be converted to heat. The temperature within the reactor vessel 102 may be controlled through the electrical energy (e.g., voltage or current) input from the power supply 124.

The reactor 100 comprises an inlet 104 and an outlet 106. A feedstock stream 108 enters the reactor vessel 102 through an inlet 104, flows through the three-dimensional structure 112 and a product stream 110 leaves the reactor vessel 102 through outlet 106. The inlet 104 is located near the bottom of the reactor vessel 102 and the outlet 106 is located near the top of the reactor vessel 102. In some aspects, the inlet 104 may be located near the top of the reactor vessel 102 and the outlet 106 may be located near the bottom of the reactor vessel 102. In some other aspects, the inlet 104 and the outlet 106 may be located on one or more sides of the reactor vessel 102.

The feedstock stream 108 may comprise a liquid, a gas, or a combination thereof. In some examples, the feedstock may comprise at least one of steam (H₂O), carbon dioxide (CO₂), or a light hydrocarbon species. The light hydrocarbon species includes a hydrocarbon having a carbon number in the range of C1 to about C7, about C1 to about C6, in some aspects, about C1 to C4. For example, the light hydrocarbon species may include one or more of methane, ethane, propane or butane. In some examples, the feedstock may include fossil-fuel based feedstock such as natural gas, flare gas, refining tail gas, etc. In some embodiments, the feedstock may be a non-fossil fuel fuel-based feedstock such as biogas, industrial waste gas, etc.

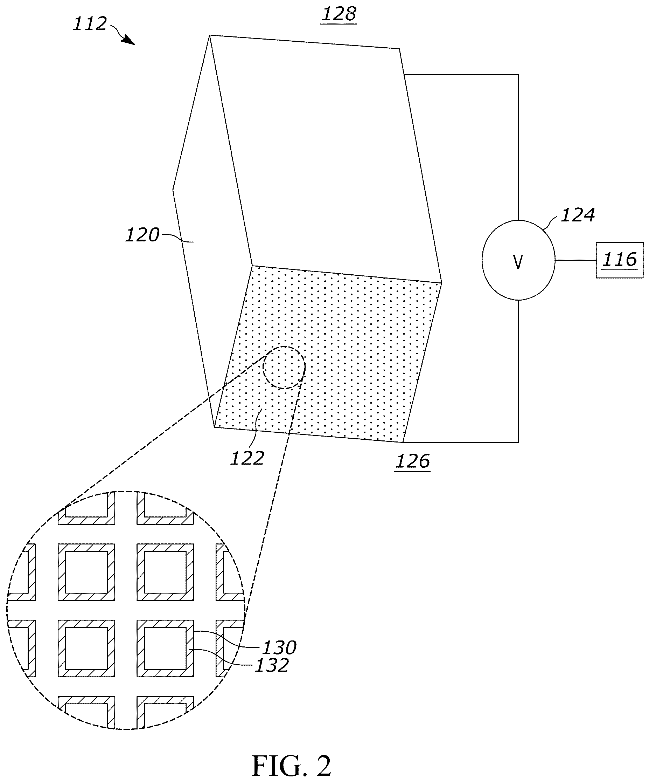

Referring now to FIG. 2, a perspective view of the three-dimensional structure 112 is shown. The three-dimensional structure 112 may be in the form of monolithic structure. The three-dimensional structure 112 includes a body 120 having a honeycomb structure with a plurality of parallel channels 122 disposed between the two ends of the three-dimensional structure 112. A catalyst 132 or catalytic material may be supported on the honeycomb structure within the body 120. The honeycomb structure maximizes the surface area available for reactions while minimizing the pressure drop of fluid flowing through the body 120.

In some embodiments, the three-dimensional structure 112 may include a plurality of parallel channels 122 that have a rectangular cross-sectional shape. In some embodiments, the cross-sectional shape alternatively may be round, triangular, hexagonal, or combinations thereof. The three-dimensional structure 112 is disposed in the reactor (as shown in FIG. 1) such that the plurality of parallel channels 122 face the fluid flow direction. A length of the plurality of parallel channels 122 disposed between the two ends of the three-dimensional structure 112 is oriented along the fluid flow direction (e.g., the feedstock stream flow direction) to reduce pressure drop within the reactor.

The plurality of parallel channels 122 may be uniform in size. Such a uniformity may promote uniform fluid flow and heat distribution throughout the body 120, such that the three-dimensional structure 112 may be uniformly heated to increase product selectivity and yield. The three-dimensional structure 112 may include any number of parallel channels 122 dependent on the reactor requirements, catalytic reaction and fluid flow requirements. For example, the three-dimensional structure 112 may include less than 100 channels per square inch (CPSI), 200-400 CPSI, or higher than 400 CPSI. The size of each parallel channel may be any suitable size. For example, a width of each channel may be in the range of 1mm to 10mm.

The three-dimensional structure 112 may comprise an ionic conductor such as an oxygen ion conductor, a proton conductor, a carbonate ion conductor, a sodium ion conductor, a lithium-ion conductor, or a combination of one or more of these. The ionic conductor may be porous or dense. Suitable ionic conductors may include, but are not limited to, yttria stabilized zirconia (YSZ); barium cerium yttrium zirconate (BZCY); doped ceric oxide (CeO2); samarium-doped ceria oxide (SDC); gadolinium-doped ceria oxide (GDC); doped bismuth oxide, doped orthorhombic perovskite (LaGaO3); doped barium cerate-zirconate (Ba(Zr, Ce, M)O₃), where M is at least one of yttrium (Y), gadolinium (Gd), samarium (Sm), erbium (Er), scandium (Sc), ytterbium (Yb); lithium thiophosphates (e.g., Li₇P₃S₁₁ and Li₁₀GeP₂S₁₂, LGPS); garnet (e.g., Li₇La₃Zr₂O₁₂, LLZO); NASICON (e.g., Li_{1.3}Al_{0.3}Ti_{1.7}(PO₄)₃, LATP); perovskite (e.g., Li_{0.5}La_{0.5}TiO₃₇, LLTO); Li₃N; and argyrodite (e.g., Li₆PS₅Cl); Na₁₊ₓZr₂SiₓP₃₋ₓO₁₂, 0 < x < 3; and Na₄₋ₓSn₂₋ₓSbₓGe₅O₁₆.

The three-dimensional structure 112 further may comprise an electronic conductor such as a metal conductor, a ceramic electronic conductor, or combinations of these. Suitable metal conductors may include, but are not limited to, steel, stainless steel, or a high temperature alloy. The ceramic electronic conductor may include, but is not limited to, an oxide of formula ABO₃, where A is one or more element selected from the lanthanides, magnesium (Mg), calcium (Ca), strontium (Sr), barium (Ba), and lanthanum (La), and element B is at least one element selected from nickel (Ni), cobalt (Co), iron (Fe), manganese (Mn), molybdenum (Mo), and chromium (Cr).

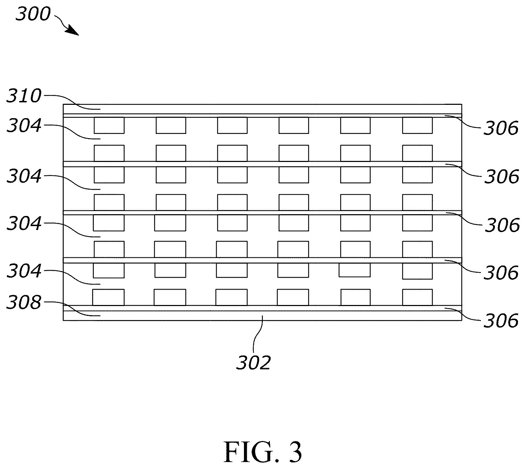

In some aspects, the three-dimensional structure 112 comprises a multi-layer structure including alternating layers of the ionic conductor and the electronic conductor. As shown in FIG. 3, the three-dimensional structure 300 includes a multi-layer structure with alternating electronic conducting layers 304 and ionic conducting layers 306. The body 302 of the three-dimensional structure 300 is composed of a first outer layer 308 and a second outer layer 310 that is spaced from and opposite the first layer 308. Both the first and second outer layer 308, 310 comprise an electronic conducting layer.

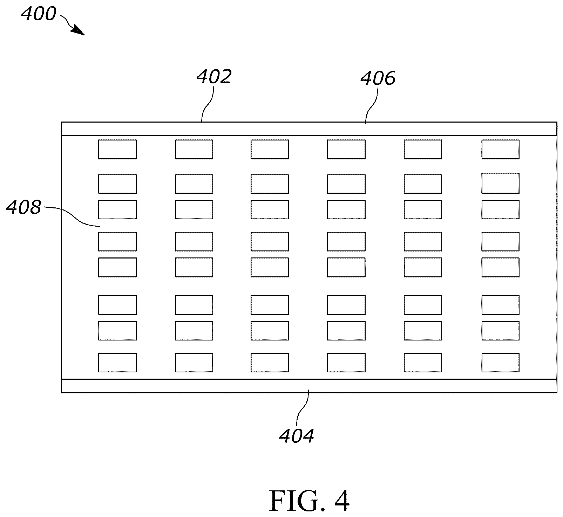

In some aspects, the three-dimensional structure 112 comprises a multi-layer structure with layers of the ionic conductor and the electronic conductor. As shown in FIG. 4, the three-dimensional structure 400 includes a multi-layer structure with a first outer layer 404 and a second outer layer 406 that is spaced from and opposite the first outer layer 404. Both the first and second outer layer 404, 406 comprise the electronic conducting layer. A middle layer 408 is disposed between the first outer layer 404 and second outer layer 406. The middle layer 408 comprises the ionic conducting layer.

Referring again to FIG. 2, a catalyst 132 may be supported on the three-dimensional structure 112 within the body 120. The catalyst 132 may be supported on the inner surfaces 130 of the parallel channels 122 of the three-dimensional structure 112. The catalyst 132 may be any suitable catalyst for the reaction intended to occur within reactor 100. In some approaches, the catalyst 132 may include a Ni-catalyst for reforming of hydrocarbons and oxygenated hydrocarbons. For example, the catalyst 132 may include, but is not limited to, Ni-YSZ, Ni-GDC, Ni-YSZ, or Ni-GDC. The catalyst 132 may be further modified with elements selected from Cu, Co, Fe, Ca, Ba, Ce, Gd, Y, Sm, Rh, Ru, Ir, Mo. The amount of modified material ranges from 0.1-20% by weight, such as between 0.5-2% by weight.

The three-dimensional structure 112 may be composed of the catalyst material, or the catalyst 132 may be applied to the surfaces of the three-dimensional structure 112 using one or more application techniques used in the industry to deposit catalyst on supports. In some approaches, the catalyst 132 may be applied to the three-dimensional structure 112 through washcoating or impregnation. The three-dimensional structure 112 may be dipped, soaked, sprayed or vacuum-impregnated with a slurry containing the catalyst material and a binder. After application of the slurry, the three-dimensional structure 112 is dried and calcined to fix the catalyst 132 onto the inner surfaces 130 of the parallel channels 122 of the honeycomb structure. In some other approaches, the catalyst 132 may be applied to the three-dimensional structure 112 through a deposition process, such as chemical vapor deposition, Physical vapor deposition, etc. Any suitable application process may be selected based on the type of catalyst, desired loading level, thickness, and distribution of the catalyst, and material and operating conditions of the three-dimensional structure 112 in the reactor.

A power supply 124 is electrically connected across the three-dimensional structure 112. In some examples, a first end includes a first electrical terminal 126 and a second end includes a second electrical terminal 128. The power supply 124 is electrically connected across the three-dimensional structure 112 to generate an ionic current. The power supply 124 may be a direct current (DC) power supply or an alternating current (AC) power supply. Such a configuration utilizing an AC power supply may reduce the electrical costs required for the electricity consumption.

In some embodiments, the power supply 124 may be powered by grid-based electricity, a renewable electricity source, or combinations thereof. Suitable renewable electricity sources include but are not limited to solar, wind, geothermal, hydropower electricity sources.

In operation, the power supply 124 may apply a voltage between the first and second electrical terminals 126, 128. The applied voltage may cause the dissociation of ionic compounds in the ionic conductor layer into their constituent ions. The dissociated ions may flow through the ionic conductor and the resistance of the flow of ions through the ionic conductor may locally generate heat on one or more surfaces of the three-dimensional structure 112. The generated heat due to ionic conduction can maintain the operating temperatures required to facilitate endothermic reactions or heat fluid streams with a short response time, providing the ability to selectively and dynamically control the heat generated by, and temperature of, the three-dimensional structure 112. In addition, the dissociated ions may flow through the ionic conductor lattice to reaction sites adjacent to the parallel channels to participate in the reaction.

In one aspect, the ionic conductor may comprise yttria stabilized zirconia (YSZ) and the feedstock may include carbon dioxide (CO₂) and water (H₂O).The power supply 124 may promote the catalytic conversion of the feedstock and the ionic phase dissociation to oxygen ions (O²⁻). The dissociated oxygen ions (O²⁻) may flow through the YSZ lattice to reaction sites adjacent to the parallel channels to participate in the reaction to convert carbon dioxide (CO₂) and water (H₂O) to carbon monoxide (CO) and hydrogen (H₂) to form syngas (CO + H₂). In another aspect, the feedstock may include methane (CH₄). The dissociated oxygen ions (O²⁻) may participate in the reaction with the methane (CH₄) form syngas (CO + H₂). Thus, the ionic dissociation in the ionic conducting layer improves the mobility of oxygen ions (O²⁻), generates heat, and improves product selectivity, thereby enhancing the efficiency of syngas production.

In some aspects, a controller 116 may be communicatively coupled to the power supply 124. The controller 116 may be configured to adjust one or more operating parameters of the three-dimensional structure 112 by controlling one or more parameters of the power supply 124. The controller 116 may be electrically connected to the power supply 124 or may communicate information to or from one another over a network. The network can be any suitable communication network. The controller 116 may be manually controlled, via an operator, or automatically controlled.

In some embodiments, the controller 116 may be implemented as one or more processors and/or microprocessors that stores operational code or a set of instructions that is executed by the controller and/or the processors to implement the functionality and control of the power supply 124. In some embodiments, the controller 116 may be configured to store some or all of the data associated with operation of the components of the reactor 100.

The controller 116 further communicates with one or more sensors 114 disposed in the internal cavity 103 of the reactor body 102. The one or more sensors 114 may be located near the inlet 104, the three-dimensional substrate 112 and/or the outlet 106 to measure data such as temperature, ionic concentration, and reaction rates. The one or more sensors may include, but not limited to, temperature sensors, flow sensors, ionic concentration sensors, electrochemical sensors, probes, in-situ spectroscopy or combinations thereof. The type of sensors, number of sensors and the location of the sensors may vary.

In operation, the controller 116 is configured to adjust one or more operating parameters of the power supply 124 based on the measured data from the one or more sensors 114. The measured data may be previously captured, continuously updated or may include real-time data. In some embodiments, the controller 116 may gradually or continuously adjust the operating parameters of the power supply 124 based on the updated or real-time measured data from the one or more sensors 114 to maintain optimal operating conditions within the internal cavity 103 and the three-dimensional supply 112 for high reaction rates and product yield.

In some embodiments, the controller 116 is configured to control the temperature of the three-dimensional structure 112 by adjusting at least one of a voltage or a current output of the power supply 124. The dissipated heat is a function of the voltage and current supplied to the three-dimensional structure 112. For example, the controller 116 may increase the amount of voltage or current supplied to the three-dimensional structure 112 and as the voltage or current increases the dissipated heat in the three-dimensional structure 112 also increases.

In some embodiments, the controller 116 is configured to adjust a level of ionic species present and formed by adjusting the parameters of the power supply 124. In one aspect including methane steam reforming (CH₄+H₂O=CO+3H₂) utilizing a three-dimensional structure 112 comprising an oxygen ion conductor or a proton conductor, the controller may be configured to apply and tune a voltage to promote steam (H₂O) dissociation, forming oxygen ions (O²⁻) and/or protons (H⁺). The formation of oxygen ions (O²⁻) and/or protons (H⁺) may reduce the activation energy (the energy barrier that must be surmounted for chemical reaction to occur) for methane reforming, thereby reducing the required energy consumption, and may improve conversion efficiency.

In some embodiments, the controller 116 is configured to adjust a reaction rate occurring within the three-dimensional structure 112. The controller 116 may adjust the parameters of the power supply 124 including the voltage and/or current supplied to the three-dimensional structure 112 to maintain the temperature at or within an optimal temperature range. The catalyst 132 has an optimal temperature range where they are most effective. If the temperature is too low, the catalytic reactions may be low or may not occur. Alternatively, if the temperature is too high, thermal degradation of the catalyst 132 may occur. In addition, the temperature may also affect the selectivity of the catalyst 132. At different temperatures, the catalyst 132 may favor the formation of different reaction products. As such, the parameters of the power supply 124 may be continuously updated based on the measured data from the sensor 114 for optimal catalytic activity, selectivity, high reaction rates and product yield.

Further aspects of the disclosure are provided by the subject matter of the following clauses:
A reactor comprising: a reactor body defining an internal cavity; and a three-dimensional structure disposed in the internal cavity of the reactor body, the three-dimensional structure comprising an ionic conductor, the three-dimensional structure having a first end and a second end spaced from and opposite the first end, the first end including a first electrical terminal and the second end including a second electrical terminal; wherein the first electrical terminal and the second electrical terminal are coupled to a power supply to generate ionic current between the first electrical terminal and the second electrical terminal.

The reactor of any preceding clause, further comprising: a catalyst disposed on the three-dimensional structure.

The reactor of any preceding clause, wherein the catalyst comprises a nickel (Ni) containing catalyst.

The reactor of any preceding clause, wherein the ionic conductor comprises at least one of an oxygen ion conductor, a proton conductor, a carbonate ion conductor, a sodium ion conductor or a lithium ion conductor.

The reactor of any preceding clause, wherein the ionic conductor comprises yttria stabilized zirconia (YSZ), barium cerium yttrium zirconate (BZCY), doped ceric oxide (CeO₂), or a combination of any of these.

The reactor of any preceding clause, wherein the three-dimensional structure further comprises an electronic conductor.

The reactor of any preceding clause, wherein the three-dimensional structure comprises a multi-layer structure with alternating layers of the ionic conductor and the electronic conductor.

The reactor of any preceding clause, wherein the three-dimensional structure comprises a multi-layer structure comprising a first outer layer, a second outer layer that is spaced from and opposite the first outer layer, and a middle layer disposed between the first outer layer and the second outer layer, and wherein the first outer layer and the second outer layer comprise the electronic conductor and the middle layer comprises the ionic conductor.

The reactor of any preceding clause, wherein the electronic conductor comprises at least one of a metal conductor or ceramic electronic conductor.

The reactor of any preceding clause, wherein the three-dimensional structure is a honeycomb shaped structure.

The reactor of any preceding clause, wherein the power supply is an AC power supply.

The reactor of any preceding clause, wherein the power supply is a DC power supply.

A reactor system comprising: a reactor comprising a reactor body that defines an internal cavity and a three-dimensional structure disposed within the internal cavity of the reactor body, the three-dimensional structure comprising an ionic conductor, the three-dimensional structure having a first end and a second end spaced from and opposite the first end, the first end including a first electrical terminal and the second end including a second electrical terminal; a power supply coupled to the first electrical terminal and the second electrical terminal of the three-dimensional structure; and a controller in operative communication with the power supply, the controller configured to adjust an amount of heat energy input to the reactor by the three-dimensional structure by adjusting the power supply.

The reactor system of any preceding clause, wherein the controller is configured to control a temperature of the reactor by adjusting at least one of a voltage or a current output of the power supply.

The reactor system of any preceding clause, wherein the controller is configured to adjust a level of ionic species present in the reactor by adjusting the power supply.

The reactor system of any preceding clause, wherein the controller is configured to adjust a rate of a chemical reaction occurring within the reactor by adjusting the power supply.

The reactor system of any preceding clause, wherein the three-dimensional structure further comprises a catalyst disposed on a surface of the three-dimensional structure.

The reactor system of any preceding clause, wherein the three-dimensional structure further comprises an electronic conductor.

The reactor system of any preceding clause, wherein the catalyst comprises a nickel (Ni) containing catalyst.

The reactor system of any preceding clause, wherein the nickel (Ni) containing catalyst includes one or more of Ni-YSZ, Ni-GDC, Ni-YSZ, and wherein the catalyst is modified with one or more of Cu, Co, Fe, Ca, Ba, Ce, Gd, Y, Sm, Rh, Ru, Ir.

The reactor system of any preceding clause, further comprising one or more sensors disposed in the internal cavity of the reactor body, wherein the one or more sensors are in operative communication with the controller.

A method of operating a reactor, the reactor comprising a reactor body that defines an internal cavity and a three-dimensional structure comprising an ionic conductor disposed within the internal cavity of the reactor body, the method comprising: supplying electrical energy to the three-dimensional structure via a power supply; and controlling a temperature of the reactor by adjusting the electrical energy to the three-dimensional structure via the power supply.

The method of any preceding clause, wherein the electrical energy to the three-dimensional structure is adjusted by adjusting a current or voltage output by the power supply.

The method of any preceding clause, further comprising: controlling a rate of a chemical reaction occurring within the reactor by adjusting the electrical energy to the three-dimensional structure via the power supply.

The method of any preceding clause further comprising: controlling a level of ionic species present in the reactor by adjusting the electrical energy to the three-dimensional structure via the power supply.

## Claims

1. A reactor (100) comprising:
a reactor body (102) defining an internal cavity (103); and
a three-dimensional structure (112) disposed in the internal cavity (103) of the reactor body (120), the three-dimensional structure (112) comprising an ionic conductor, the three-dimensional structure (112) having a first end and a second end spaced from and opposite the first end, the first end including a first electrical terminal (126) and the second end including a second electrical terminal (128);
wherein the first electrical terminal (126) and the second electrical terminal (128) are coupled to a power supply (124) to generate ionic current between the first electrical terminal (126) and the second electrical terminal (128).

2. The reactor (100) of claim 1, further comprising:
a catalyst (132) disposed on the three-dimensional structure (112).

3. The reactor (100) of claim 1 or 2, wherein the ionic conductor comprises at least one of an oxygen ion conductor, a proton conductor, a carbonate ion conductor, a sodium ion conductor or a lithium ion conductor.

4. The reactor (100) of claim 3, wherein the ionic conductor comprises yttria stabilized zirconia (YSZ), barium cerium yttrium zirconate (BZCY), doped ceric oxide (CeO₂), or a combination of any of these.

5. The reactor (100) of any preceding claim, wherein the three-dimensional structure further comprises an electronic conductor.

6. The reactor (100) of claim 5, wherein the three-dimensional structure (112) comprises a multi-layer structure with alternating layers of the ionic conductor (306) and the electronic conductor (304).

7. The reactor (100) of claim 5, wherein the three-dimensional structure (112) comprises a multi-layer structure comprising a first outer layer (404), a second outer layer (406) that is spaced from and opposite the first outer layer (404), and a middle layer (408) disposed between the first outer layer (404) and the second outer layer (406), and wherein the first outer layer (404) and the second outer layer (406) comprise the electronic conductor and the middle layer (408) comprises the ionic conductor.

8. The reactor (100) of any of claims 5 to 7, wherein the electronic conductor comprises at least one of a metal conductor or ceramic electronic conductor.

9. The reactor (100) of any preceding claim, wherein the three-dimensional structure (112) is a honeycomb shaped structure.

10. The reactor (100) of any preceding claim, wherein the power supply (124) is an AC power supply or a DC power supply.

11. A reactor (100) system comprising:
a reactor (100) comprising a reactor body (102) that defines an internal cavity (103) and a three-dimensional structure (112) disposed within the internal cavity (103) of the reactor body (103), the three-dimensional structure (112) comprising an ionic conductor, the three-dimensional structure (112) having a first end and a second end spaced from and opposite the first end, the first end including a first electrical terminal (126) and the second end including a second electrical terminal (128);
a power supply (124) coupled to the first electrical terminal (126) and the second electrical terminal (128) of the three-dimensional structure (112); and
a controller (116) in operative communication with the power supply (124), the controller (116) configured to adjust an amount of heat energy input to the reactor (100) by the three-dimensional structure (112) by adjusting the power supply (124).

12. The reactor (100) system of claim 11, wherein the controller (116) is configured to control a temperature of the reactor (100) by adjusting at least one of a voltage or a current output of the power supply (124).

13. The reactor (100) system of claim 11 or 12, wherein the controller (116) is configured to adjust a level of ionic species present in the reactor (100) by adjusting the power supply (124).

14. The reactor (100) system of any of claims 11 to 13, wherein the controller (116) is configured to adjust a rate of a chemical reaction occurring within the reactor (100) by adjusting the power supply (124).

15. The reactor (100) system of any of claims 11 to 14, wherein the three-dimensional structure (112) further comprises a catalyst (132) disposed on a surface (130) of the three-dimensional structure (112).
